Europäisches Patentamt

European Patent Office

Office européen des brevets

(11) Publication number: **0 237 240**
A2

# EUROPEAN PATENT APPLICATION

(21) Application number: **87301774.3**

(22) Date of filing: **27.02.87**

(51) Int. Cl.³: **B 01 J 37/00**

(30) Priority: **28.02.86 JP 43200/86**

(43) Date of publication of application:
**16.09.87** Bulletin **87/38**

(84) Designated Contracting States:
**DE FR GB NL**

(71) Applicant: **NIPPON OIL CO. LTD.**
3-12, 1-chome Nishi-Shinbashi
Minato-ku Tokyo 105(JP)

(72) Inventor: **Mori, Masao**
2-23, Nishiuraga-machi
Yokosuka-shi Kanagawa-ken(JP)

(72) Inventor: **Inoue, Akira**
3-27, Mitsuzawahigashi-cho Kanagawa-ku
Yokohama-shi Kanagawa-ken(JP)

(72) Inventor: **Takase, Shinji**
4-37-21, Baba Tsurumi-ku
Yokohama-shi Kanagawa-ken(JP)

(74) Representative: **Ablewhite, Alan James et al,**
MARKS & CLERK 57/60 Lincoln's Inn Fields
London WC2A 3LS(GB)

(54) Process for the production of hydrogenating catalysts.

(57) A process is disclosed for the production of catalysts capable of treating heavy oils. Selected carbon fibers combined with alumina and alumina precursors are dried and calcined to remove such carbon fibers thereby forming porous solid alumina supports on which are deposited a selected class of metals. Large specific surface area, peculiar pore size distribution and sufficient mechanical strength are attained, providing prolonged service life of the catalysts.

EP 0 237 240 A2

- 1 -

# PROCESS FOR THE PRODUCTION OF

# HYDROGENATING CATALYSTS

This invention relates to a process for producing catalysts suitable for use particularly in the treatment of heavy oils.

Residual oils, gas oils and like oils are heavy oils produced upon distillation of crude oil at atmospheric pressure or in vacuum. The heavy oil usually contains impurities involving high molecular weight coke precursors commonly called asphaltenes which are undistillable and insoluble in light hydrocarbons such as pentane and heptane and also soluble metal compounds such as nickel and vanadium, sulfur compounds and nitrogen compounds.

These heavy oils are usually hydrogenated to remove impurities with use of catalysts carrying metals selected from Group VI B and Group VIII of the Periodic Table. However, the heavy oils are relatively rich in nickel and vanadium and highly susceptible to coke deposition which results in clogged or plugged catalyst pores and hence reduced catalytic activity.

It has now been found that catalysts of peculiar pore size distribution and superior mechanical strength can be obtained by the use of a selected type of carbon fibers combined with alumina or alumina precursors and metals selected from Group VI B and Group VIII of the Periodic Table. The catalysts according to the present invention are applicable particularly to desulfurization and demetalation of heavy oils.

It is the primary object of the invention to provide a new and improved process for the production of hydrogenating catalysts which have both macropores and micropores of unique pore size distribution, large specific surface area and high mechanical strength.

According to one aspect of the invention there is provided a process for the production of a hydrogenating catalyst comprising (a) admixing alumina or an alumina precursor with a carbon fiber, (b) drying and calcining the admixture in an oxygen-containing gas stream to remove the carbon fiber thereby providing a porous solid alumina support, and (c) depositing on the support at least one of metal component selected from Group VI B and Group VIII metals of the Periodic Table.

According to another aspect of the invention there is provided a process for the production of a hydrogenating catalyst comprising (a) admixing alumina or an alumina precursor, a carbon fiber and at least one of metal components selected from Group VI B and Group VIII metals of the Periodic Table, and (b) drying and calcining the admixture in an oxygen-containing gas stream to remove the carbon fiber.

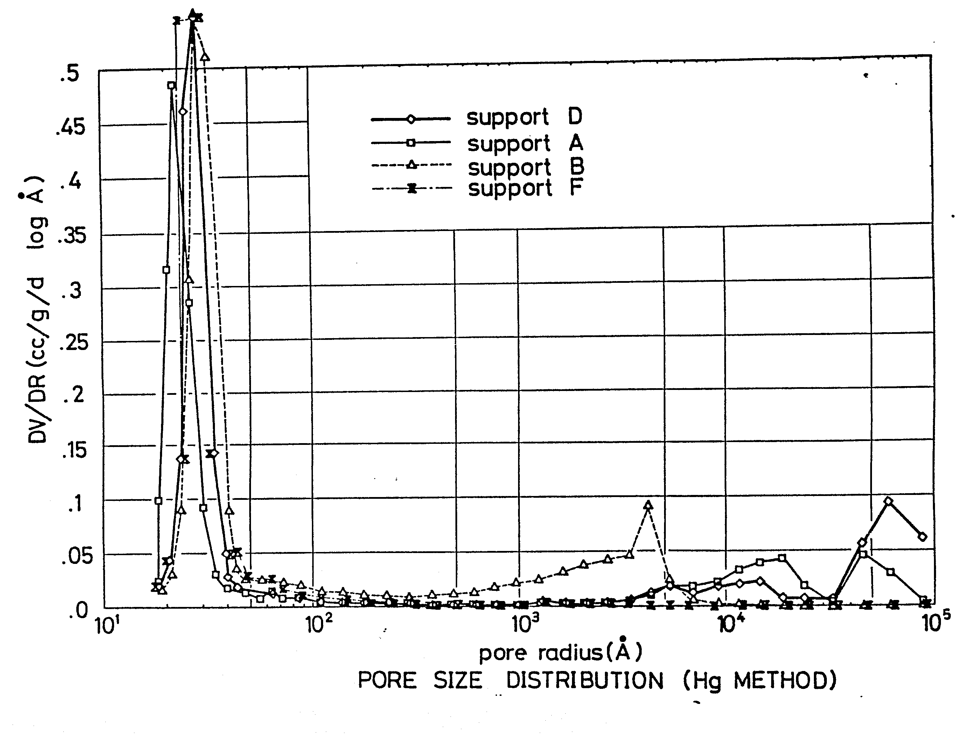

The accompanying drawing is a graphic representation of the pore size distribution of each of the three catalysts obtained by the process of the present invention and a comparative catalyst.

Alumina eligible for the purpose of the present invention includes for example beta-, gamma- and ita-alumina. Typical examples of alumina precursors include alumina hydrate particles such as bayerite, boehmite, boehmite gel, dibsite and the like that are obtainable by suitable methods commonly employed in the art. The alumina and alumina precursors may be formed by combining suitable alumina with silica, magnesia, titania, boria, zirconia, chromia, zeolite or the like in an amount of 50 % or smaller based on the weight of the alumina. They are preferably used in a particulate form. The particle size of the particulate alumina or alumina precursor should be in the range of 50 - 300 mesh, preferably 100 - 200 mesh.

Carbon fibers useful in the invention include for example fibers derived by pyrolysis spinning, nonflame treatment or heat stabilization, infusion treatment, carbonization and graphitization of polyacrylonitrile, pitch, rayon, lignin polyvinyl alcohol and the like. No particular restriction is imposed upon the kind of such starting materials. The carbon fiber may be obtained for instance by oxidizing in an ambient atmosphere a fiber pyrolysis spun from either one of those materials or by calcining or carbonizing the same in an inert gas atmosphere. Particularly preferred are spun, infusion-treated and nonflame-treated fibers which are readily combustible at a temperature of lower than $800^{\circ}C$, preferably lower than $600^{\circ}C$, and are highly shrinkable with temperature.

The diameter of the carbon fiber should be in the range of 0.1 - 100 micron, preferably 1 - 30 micron, whereas the length should suitably be greater than ten times the diameter.

The amount of the carbon fiber to be added should be in the range of 5 - 50 %, preferably 15 - 30 %, based on the weight of the alumina or alumina precursor.

Metal components eligible for the purpose of the invention are metals selected from Group VI B and Group VIII of the Periodic Table. Specific examples of the metals of Group VI B include chromium, molybdenum, tangsten and the like, and specific examples of the metals of Groups VIII include iron, cobalt, nickel, palladium, platinum and the like. Particularly preferred are nickel, molybdenum, tangsten, iron and cobalt. Such metal components may be used alone or in combination and may be in an unmodified, oxide or sulfide form.

The amount of the metal component to be deposited should be in the range of 5 - 30 %, preferably 7 - 20 %, when selected from Group VI B metals and in an amount of 1 - 10 %, preferably 3 - 8 %, when selected from Group VIII metals, respectively, based on the weight of the total composition, each such amount being calculated in terms of the oxide.

In the practice of a first embodiment of the invention, given alumina or an alumina precursor and a selected carbon fiber are dry blended homogeneously, followed by kneading as on a batch type kneader. The resulting blend may be molded as by extrusion, pelletization or the like into a cylindrical, spherical or pelleted shape. Where it is found desirable, water and molding aids may be added to blends of alumina or alumina precursors and carbon fibers. Specific examples of the aids include inorganic acids such as nitric acid, hydrochloric acid and the like, organic acids such as formic acid, acetic acid and the like, and anionic, cationic and nonionic surfactants, which aids should leave no toxic effect on the resulting catalyst.

The molded article so obtained can be dried at 50° - 200°C, preferably 100° - 150°C, followed by removal of the carbon fiber while in subsequent calcination. Since large amounts of the carbon fiber are used as specified above, the carbon fiber must be carefully removed in a stream of air, overall oxygen or an inert gas containing more than about 10 % of oxygen without sudden temperature rises and with removal of full combustion heat generated.

The calcination may be effected at $500^\circ - 800^\circ C$, preferably $500^\circ - 600^\circ C$ for 1 - 5 hours, preferably 1 - 3 hours.

As a result of the calcination, a porous solid alumina support is obtainable which has both micropores having a diameter of smaller than 400 Å peculiar to the primary particles in the alumina and macropores having a diameter of 400 Å to scores of thousands of angstrom due to the carbon fiber being admixed and removed by combustion. The macropores vary in volume depending upon the amounts of carbon fibers and can be adjustably distributed according to the size and length of the carbon fiber.

The above alumina support may be allowed to deposit one or more metal components thereon by conventional means such for instance as by immersion, coprecipitation or the like.

Subsequently, the metal component-deposited support can be calcined at $200^\circ - 800^\circ C$, preferably $500^\circ - 600^\circ C$ for 1 - 5 hours, preferably 1 - 3 hours, thereby obtaining a desired catalyst.

A second embodiment of the invention involves kneading and homogenizing alumina precursor, a carbon fiber and at least one given metal component as on a batch type kneader, followed by molding by such a method as and in such a shape as specified above. There may be used water or molding aids.

The resulting molded article can be dried at 50° - 200°C, preferably 100° - 150°C, after which the carbon fiber is removed during subsequent calcination. This step of removal must be done with care as is in the first embodiment.

The calcination can be conducted at 500° - 800°C, preferably 500° - 600°C for 1 - 5 hours, preferably 1 - 3 hours.

Importantly, the catalysts produced in accordance with the invention should have a specific surface area of 100 - 400 $m^2$/g and a total pore volume of 0.2 - 1.5 cc/g, preferably 0.5 - 1.2 cc/g. More specifically, the catalysts should have a pore size distribution in which 40 - 90 %, preferably 60 - 80%, of the total pore volume is a pore diameter portion smaller than 400 Å, the pore volume in that portion being at least 0.1 cc/g, preferably 0.4 - 0.8 cc/g, the pore volume greater than 400 Å being at least 0.1 cc/g, preferably 0.2 - 0.6 cc/g.

The following examples are given to further illustrate the present invention, but it is to be understood that the invention is not limited thereto.

Mercury-pressure porosimeter (Series 9200, Micromelitex Inc.) was used to measure the pore diameter, pore volume and surface area of each of the catalysts tested. Measurement was made at an absolute mercury pressure of 0.035 - 4,200 $kg/cm^2$. Pore diameters greater than 35 Å for a cylindrical pore size model in that pressure range may be defined by the following equation:

$$\text{pore diameter (Å)} = \frac{148,300}{\text{absolute mercury pressure (kg/cm}^2\text{)}}$$

Thus, pore diameters determinable are in the range of 35 A - 0.424 mm.

## Example 1

A dry blend of 150 g of commercially available alumina sol ($Al_2O_3$: 67 %, Cataloid AP, Catalysts and Chemicals Industries Co., Ltd.) and 30 g of pitch-based carbon fiber (diameter: 13 μm, length: 10 - 20 mm) was added with 160 cc of 0.1 % aqueous solution of a nonionic surfactant (Nonipol 60, Sanyo Chemical Industries, Ltd.) and by kneading at room temperature for 60 minutes on a batch type kneader. Kneading was continued with heat and water content control for 60 minutes, whereupon the blend was extrusion molded to a diameter of 1.0 mm. The extrudate was dried at 130°C for 5 hours and calcined with a gradual temperature rise to 580°C for 2 hours in an air-circulating oven to thereby give a solid alumina support.

The support was immersed for 24 hours in aqueous ammoniacal solution in which were dissolved ammonium molybdate (10 wt.% as $MoO_3$), nickel nitrate (1 wt.% as NiO) and cobalt nitrate (1 wt.% as CoO). After being dewatered and disposed still overnight at room temperature, the metal-carrying support was dried at 130°C for 3 hours and subsequently calcined at 550°C for 2 hours thereby obtaining a catalyst A.

Example 2

The procedure of Example 1 was followed except that the carbon fiber was changed to infusion-treated fiber (diameter: 13 μm, length: 10 - 20 mm) thereby obtaining a catalyst B.

Example 3

A particulate alumina precursor was prepared by a method known in the art. To 42.5 liters of deionized water was added 21.2 kg of sodium aluminate, and the mixture was stirred and combined with 0.75 kg of 50 % aqueous gluconic acid solution, followed by heating to 60°C and by pH adjustment to 7.5 using 16 % aqueous aluminum sulfate solution kept at 60°C. The mixture after being neutralized was disposed still for one hour and vacuum filtered. The resulting solid was kneaded for about 6 hours and regulated in its particle size. Subsequent drying at 130°C for 5 hours gave a particulate alumina precursor which was found by X-ray

- 10 -

diffractometry to be pseudo boehmite having a crystalline size of 42 Å.

The alumina precursor was dry blended with a carbon fiber similar to Example 2 in an amount of 20 % based on the weight of dry alumina. After addition of aqueous solution containing 0.5 wt.% of a nonionic surfactant, kneading was done at room temperature for 60 minutes and further kneading with heat and water content control for 60 minutes on a batch type kneader. The blend was extrusion molded to a diameter of 1.0 mm. The extrudate was dried and calcined under the same conditions as in Example 1 to thereby give a solid alumina support.

The support was immersed for 24 hours in aqueous ammoniacal solution having dissolved ammonium molybdate (12 wt.% as $MoO_3$) and cobalt nitrate (4 wt.% as $CoO$). After being dewatered and disposed still overnight at room temperature, the metal component-carrying support was dried at $130^{\circ}C$ for 3 hours and calcined at $550^{\circ}C$ for 2 hours thereby obtaining a catalyst C.

Example 4

The procedure of Example 1 was followed except that the carbon fiber was changed to carbonized fiber (diameter: 18 μm, length: 6 mm) thereby obtaining a catalyst D.

Example 5

A dry blend of 1,500 g of alumina sol similar to Example 1, 450 g of carbonized fiber, ammonium molybdate (15 wt.% as $MoO_3$) and cobalt nitrate (5 wt.% as CoO) was added with 200 cc of aqueous solution containing 1 wt.% of a nonionic surfactant. Kneading was done at room temperature for 60 minutes on a batch type kneader and further kneading with heat and water content control for 60 minutes. The resulting blend was extrusion molded to a diameter of 1.0 mm. The extrudate was treated in a manner similar to Example 1 thereby obtaining a catalyst E.

Comparative Example 1

The procedure of Example 1 was followed except that no carbon fiber was used thereby obtaining a catalyst F.

The physical properties of the catalysts A to F provided in the above examples are given in Table 1. The pore size distributions of the catalysts A, B, D and F are shown in the accompanying drawing.

Example 6

The catalyst A of Example 1 and the catalyst F of the Comparative Example 1 were used to hydrogenate a residual oil resulting from atmospheric distillation of Kahnuj crude oil. The reactor was of a fixed bed type equipped with a tower having on its inner wall four thermocouples attached to measure the temperatures in catalytic phases.

The tests were made under the conditions given

- 12 -

below and with the results shown in Table 2.

1) Residual Oil

| | |
|---|---|
| specific gravity $(15/4^{\circ}C)$ | 0.981 |
| sulfur (wt.%) | 4.27 |
| nitrogen (ppm) | 2,400 |
| pentane insoluble (wt.%) | 11.00 |
| vanadium (ppm) | 69 |
| nickel (ppm) | 19 |

2) Reaction Conditions

| | |
|---|---|
| temperature $(^{\circ}C)$ | 380 |
| pressure $(kg/cm^2)$ | 140 |
| liquid to liquid space velocity $(hr^{-1})$ | 0.5 |
| hydrogen/hydrocarbon oil $(nM^3/Kl)$ | 1,000 |
| run (hr.) | 1,000 - 3,000 |

It should be noted as appears clear from Table 1 that the catalysts A to E representing the invention are highly satisfactory in respect of specific surface area and pore size distribution compared to the catalyst F devoid of a carbon fiber. The catalyst A exhibits sufficient performance characteristics even after a 3,000-hour run as is apparent from Table 2. The control F encountered sharply reduced rates of desulfurization and demetalation prior to the same run time.

## Table 1

| catalyst | carbon fiber | amount (wt.%) | pore volume (cc/g) | | | surface area ($m^2$/g) | pore diameter (Å) |
|---|---|---|---|---|---|---|---|
| | | | 35 Å – 35 μm | 35 Å – 400 Å | >400 Å | | |
| A | pitch-based | 20 | 0.61 | 0.40 | 0.21 | 314 | 78 |
| B | infusion-treated | 20 | 0.75 | 0.54 | 0.21 | 314 | 96 |
| C | infusion-treated | 20 | 0.76 | 0.53 | 0.23 | 330 | 92 |
| D | carbonized | 20 | 0.74 | 0.43 | 0.31 | 282 | 104 |
| E | carbonized | 30 | 0.72 | 0.43 | 0.29 | 250 | 115 |
| F | -- | -- | 0.57 | 0.57 | 0.00 | 370 | 62 |

0237240

## Table 2

| run (hr.) | 1,000 | | 2,000 | | 3,000 | |
|---|---|---|---|---|---|---|
| catalyst | A | F | A | F | A | F |
| S (wt.%) | 1.50 | 1.23 | 1.85 | 1.75 | 2.00 | 3.02 |
| Ni + V (ppm) | 27 | 46 | 31 | 50 | 38 | 70 |
| desulfurization (%) | 65 | 71 | 57 | 59 | 53 | 29 |
| demetalation (%) | 69 | 48 | 65 | 43 | 57 | 20 |

CLAIMS:

1. A process for the production of a hydrogenating catalyst comprising:

    (a) admixing alumina or an alumina precursor with a carbon fiber;

    (b) drying and calcining the admixture in an oxygen-containing gas stream to remove said carbon fiber thereby providing a porous solid alumina support; and

    (c) depositing on said alumina support at least one of metal component selected from Group VI B and Group VIII metals of the Periodic Table.

2. A process for the production of a hydrogenating catalyst comprising:

    (a) admixing alumina or an alumina precursor, a carbon fiber and at least one metal component selected from Group VI B and Group VIII metals of the Periodic Table or an oxide, sulfide or salt thereof; and

    (b) drying and calcining the admixture in an oxygen-containing gas stream to remove said carbon fiber.

3. A process according to claim 1 or claim 2 wherein said alumina is a beta-, gamma- or ita-alumina, and said alumina precursor is bayerite, boehmite, boehmite gel or dibsite.

4. A process according to claim 1 or claim 2 wherein said carbon fiber is a fiber resulting from the pyrolysis spinning, nonflame treatment, infusion treatment, carbonization or graphitization of polyacrylonitrile, pitch, rayon or lignin polyvinyl alcohol.

5. A process according to claim 4 wherein said carbon fiber has a diameter of 0.1 - 100 micron and a length of greater than ten times the diameter.

6. A process according to claim 1 or claim 2, wherein said one metal component is chromium, molybdenum or tungsten of Group VI B, and iron, cobalt, nickel, palladium or platinum of Group VIII.

7. A process according to claim 1 or claim 2 wherein said carbon fiber is added in an amount of 5 - 50 weight percent based on said alumina or alumina precursor.

8. A process according to claim 1 wherein said at least one metal is deposited in a total amount of 5 - 30 weight percent when selected from Group VI B metals and in a total amount of 1 - 10 weight percent when selected from Group VIII metals, respectively, based on the total composition, each said amount being calculated in terms of the oxide.

PORE SIZE DISTRIBUTION (Hg METHOD)